# EUROPÄISCHE PATENTSCHRIFT

(11) **EP 0 916 246 B1**
(45) Veröffentlichungstag und Bekanntmachung des Hinweises auf die Patenterteilung: **05.03.2003**
(21) Anmeldenummer: 98120546.1
(22) Anmeldetag: 30.10.1998
(51) Int. Cl.: A01C 5/06, A01B 23/06, A01C 7/20

(54) **Scheibensäschar**
Seedrill disc
Disque de semoir

(30) Priorität: 05.11.1997 DE 19748837; 22.04.1998 DE 19818063
(43) Veröffentlichungstag der Anmeldung: 19.05.1999
(60) Teilanmeldung: 02017809.1
(73) Patentinhaber: Amazonen-Werke H. Dreyer GmbH & Co. KG, 49205 Hasbergen (DE)
(72) Erfinder: Steenken, Bernd, 49751 Sögel (DE); Steen, Rüdiger, 26831 Bunde (DE)
(74) Vertreter: Grünecker, Kinkeldey, Stockmair & Schwanhäusser Anwaltssozietät

(56) Entgegenhaltungen:
- EP-A- 0 686 341
- WO-A-96/24239
- DE-A- 4 310 498
- DE-B- 1 094 514
- DE-B- 2 810 221
- DE-C- 224 409
- US-A- 4 796 550
- US-A- 5 562 055

## Beschreibung

Die Erfindung betrifft ein Scheibensäschar gemäß des Oberbegriffs des Patentanspruchs 1.

Ein derartiges Scheibensäschar ist beispielsweise durch die US-PS 47 60 806 bekannt. Dieses Scheibensäschar weist eine Scharscheibe zur Schaffung einer Säfurche auf. Desweiteren ist der Scheibe ein in etwa auf Scheibenhöhe zugeordnetes Tiefenführungselement mittels einer Einstelleinrichtung drehbar gelagert zugeordnet. Das Tiefenführungselement ist als Gummilaufband ausgebildet, wobei der Lauffläche des Gummilaufrades auf der der Scheiben zugewandten Seite des Rades ein umlaufender, elastischer Abstreiferrand zugeordnet ist.

Es hat sich gezeigt, dass insbesondere bei feuchten und schmierigen Einsatzverhältnissen sich Boden auf der Lauffläche anbackt bzw. anhaftet und sich dann ein umlaufender, immer größer werdender Erdring aufbaut. Die Elastizität des Gummilaufrades reicht nicht aus, damit anhaftende und anbackende Bodenteile in jedem Falle abplatzen.

Diesen Scheibensäscharen sind Tiefenführungsrollen zugeordnet, die mittels einer Einstelleinrichtung gegenüber der jeweiligen Scharscheibe verstellbar sind. In vielen Fällen ist es erwünscht, das Tiefenführungsmittel abnehmen zu können, um die Scharscheiben ohne Tiefenführungsmittel einsetzen zu können.

Weiterhin ist aus der DE 1094514 eine Vorrichtung zum Ziehen von Saatfurchen bekannt.

Der Erfindung liegt die Aufgabe zugrunde, ein einfach aufgebautes Scheibensäschar mit einem gut funktionierenden Tiefenführungselement, auch unter schwierigen Einsatzverhältnissen, insbesondere für den Einsatz bei der Mulchsaat, zu schaffen.

Diese Aufgabe wird erfindungsgemäß dadurch gelöst, dass das Tiefenführungsmittel als auf einem Tragkörper kreisförmig um die Drehachse im Abstand zueinander angeordnete, seitlich abstehende Tiefenführungselemente ausgebildet ist. Infolge dieser Maßnahmen entsteht ein einfach herzustellendes Tiefenführungsmittel mit einer guten Tiefenführung, wobei aufgrund der im Abstand zueinander angeordneten seitlichen Tiefenführungselemente eine hohe Elastizität des Tiefenführungsmittels erreichbar ist, die in jedem Falle dafür sorgt, daß anhaftende und anbackende Bodenteile sich sofort von dem Tragkörper und den Tiefenführungselementen lösen.

Vorteilhaft ist, wenn die Tiefenführungselemente noppenartig ausgebildet sind. In vorteilhafter Weise sind die Noppen kegel- oder kegelstumpfförmig ausgebildet. Durch diese Formgebung wird eine gute Selbstreinigung gewährleistet. Dadurch, daß die Hohlkörper in einer bevorzugten Ausführungsform als nach innen offene Hohlkörper ausgebildet sind, wird eine für die Selbstreinigung besonders gute Ausbildung der Noppen erreicht. Hierbei hat sich gezeigt, daß es vorteilhaft ist, daß die Tiefenführungselemente als beabstandet zueinander angeordnete Noppen und/oder Stifte ausgebildet sind. Somit ergibt sich eine vorteilhafte, unterbrochene Lauffläche.

In einer bevorzugten Ausführungsform ist vorgesehen, daß der Tragkörper als scheibenartiges Element ausgebildet ist, daß an der Außenseite des scheibenartigen Elementes etwa senkrecht zur Fläche des scheibenartigen Elementes abstehende Stifte oder Noppen angeordnet sind. Infolge dieser Maßnahme ergibt sich ein einfach aufgebautes, auch unter schwierigsten Einsatzverhältnissen, das Scheibensäschar exakt in der Tiefe führendes Tiefenführungsmittel, welches darüber hinaus verstopfungsunanfällig arbeitet. Darüber hinaus gewährleistet diese Ausgestaltung eine hohe Stabilität mit einer ausreichenden Flexibilität für das Tiefenführungsmittel, die für die Selbstreinigung unerläßlich ist.

Eine saubere Saatgutablage in der von der Scheibe gezogenen Saatfurche wird dadurch gewährleistet, daß an den Saatleitungsenden ein mit der Scharhalterung verbundener und an die Scheibe anliegender, bis zu dem Scheibenumfang der Scharscheibe reichender Scharkörper sich anschließend angeordnet ist. Dieser Scharkörper räumt evtl. sich in der Scharfurche befindende Pflanzen- und Erdrückstände aus der Säfurche bzw. erweitert die Säfurche, so daß die Saatkörner in einer ausreichend ausgebildeten Säfurche abgelegt werden können.

Insbesondere ist vorteilhaft, daß das Tiefenführungselement als Tiefenführungsrolle mit unterbrochener Lauffläche ausgebildet ist, wobei auf der der Scheibe zugeordneten Seite der Tiefenführungsrolle ein die Lauffläche in radialer Richtung überragender schmaler, scheibenartiger Ring angeordnet ist. Die Lauffläche wird von den im Abstand zueinander angeordneten noppenähnlichen Elementen gebildet.

Um eine vorteilhaft ausgebildete Einstelleinrichtung für das Tiefenführungsmittel vorzuschlagen, welche in bevorzugter Weise derart ausgebildet sind, daß das Tiefenführungsmittel in einfacher Weise an dem Scheibensäschar anzuordnen ist oder abgenommen werden kann, sind die kennzeichnenden Merkmale des Patentanspruches 14 vorgesehen. Infolge dieser Maßnahmen ist es in überraschend einfacher Weise möglich, das Tiefenführungsmittel mit der Einstelleinrichtung von dem Säschar abzunehmen.

Eine einfache Ausbildung des Schnellverschlusses zur Anordnung des Tiefenführungsmittels mit der Einstelleinrichtung an der Scharhalterung wird durch die Merkmale des Patentanspruches 15 erreicht. Diese Ausbildung des Schnellverschlusses ist einfach und robust.

Eine stabile Lage des Hebels, an welchem das Tiefenführungsmittel drehbar gelagert ist, gegenüber der Scharhalterung wird durch die Merkmale des Patentanspruches 16 erreicht. Hierdurch wird quasi eine Dreipunktauflage des Hebels an der Scharhalterung erreicht.

Um den Hebel sicher an der Scharhalterung anzuordnen, ist das Merkmal des Patentanspruches 17 vorgesehen. Die Rastnase bildet somit gleichzeitig die Arretierung des Hebels an der Scharhalterung.

Eine besonders vorteilhafte und sichere Anordnung des Tiefenführungsmittels ergibt sich durch das Merkmal des Patentanspruches 18. Hierbei wird die Eigenelastizität des Tiefenführungsmittels ausgenutzt, um die Rastnase des Hebels im Bereich der Rastnase sicher gegen die Scharhalterung zu drücken.

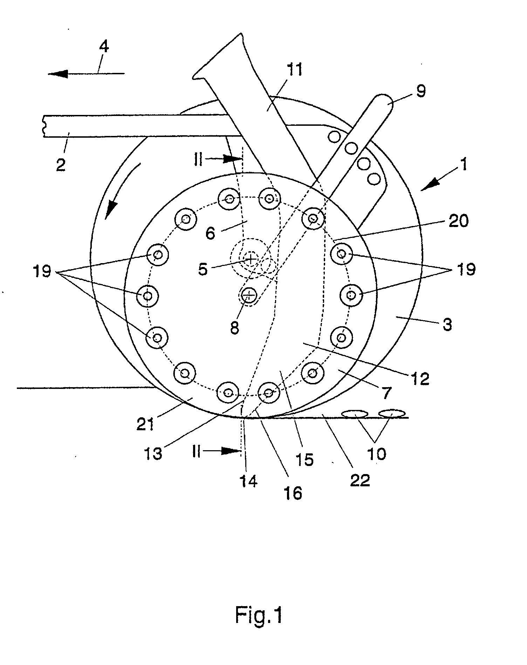

Weitere Einzelheiten der Erfindung sind der Beispielsbeschreibung und den Zeichnungen zu entnehmen. Hierbei zeigen
- Fig.1: das Scheibensäschar in Seitenansicht und in Prinzipdarstellung,

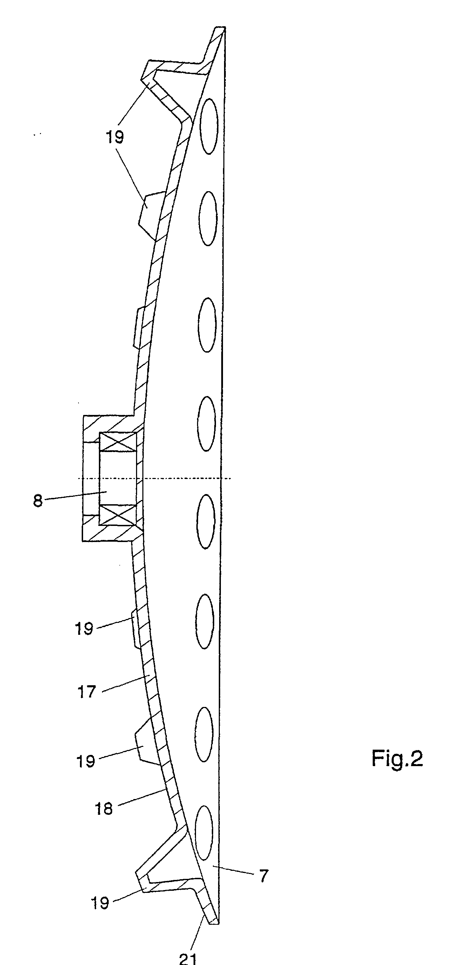

- Fig.2: das Tiefenführungsmittel des Scheibensäschares in der Ansicht II-II,

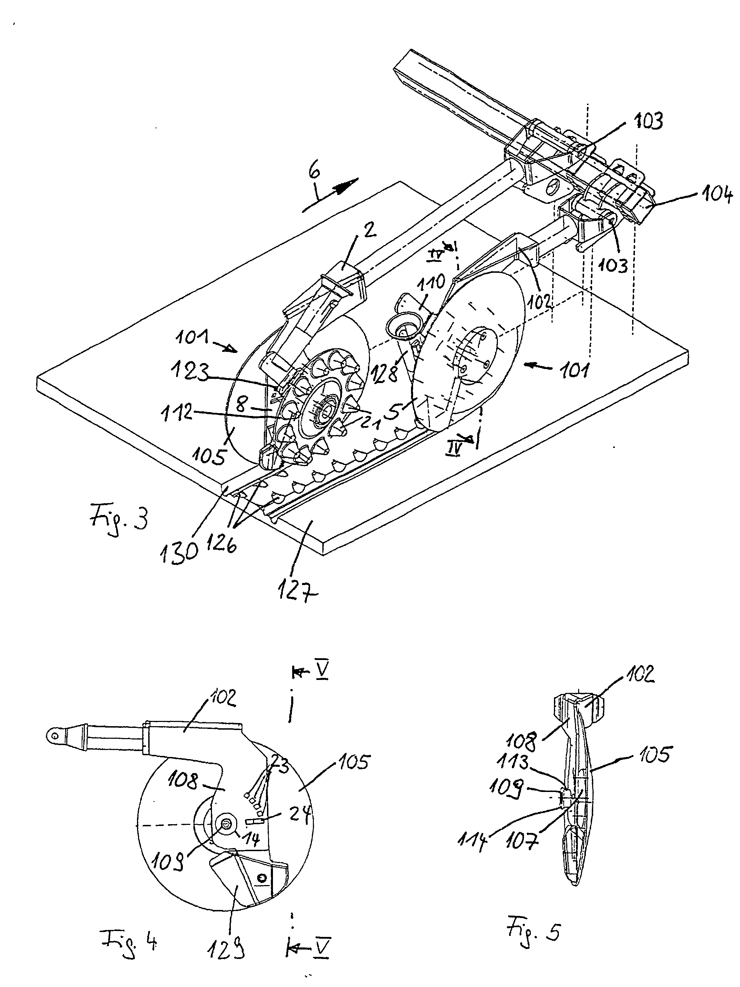

- Fig.3: die Anordnung der Scheibensäschare ausschnittsweise an einem Scharbalken in perspektivischer Darstellung,
- Fig.4: das Scheibensäschar nach Abnahme des Tiefenführungselementes in der Ansicht IV-IV,

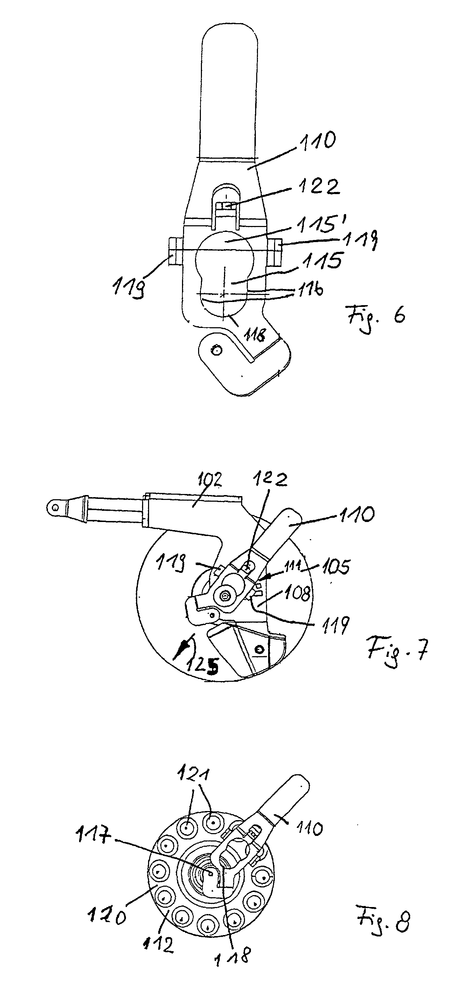

- Fig.5: das Scheibensäschar in der Ansicht V-V,
- Fig.6: den Einstellhebel in Seitenansicht und vergrößertem Maßstab,
- Fig.7: das Scheibensäschar mit dem auf dem Schwenkbolzen angeordneten Hebel, jedoch ohne Anordnung des Tiefenführungsmittels an dem Einstellhebel und
- Fig.8: den Einstellhebel mit dem Tiefenführungselement.

Das Scheibensäschar 1 ist mittels einer Scharhalterung 2 in aufrechter Ebene bewegbar an dem nicht dargestellten Rahmen einer Sämaschine angeordnet. Das Scheibensäschar 1 weist eine Scharscheibe 3, die jeweils winkelig gegenüber der Vertikalen und zur Fahrtrichtung 4 schräg angestellt ist, auf. Die Scharscheibe 3 ist mittels eines Drehlagers 5 an der Halterung 6 der Scharhalterung 2 drehbar gelagert. Desweiteren ist der Scheibe 3, in Fahrtrichtung 4 gesehen, etwa auf Scheibenhöhe ein Tiefenführungsmittel 7 zugeordnet. Zwischen der Halterung 6 der Scharhalterung 2 und der Lagerung 8 des Tiefenführungsmittels 7 ist eine Einstelleinrichtung 9 angeordnet, mittels welcher die Höhenlage des Tiefenführungsmittels 7 zur Scharscheibe 3 veränderbar ist, so daß die Säfurchentiefen und somit unterschiedliche Ablagetiefen für das Saatgut 10 erreichbar sind.

Desweiteren ist dem Scheibensäschar 1 eine Saatleitung 11 zugeordnet, die an ihren Saatleitungsende 12 mit einem Scharkörper 13 verbunden ist. Der Scharkörper 13 liegt dicht, jedoch mit einem kleinen Spalt an der Scheibe 3 an und reicht bis zum Scheibenumfang 14 der Scharscheibe 3. Der Scharkörper 13 ist zwischen der Scharscheibe 3 und dem Tiefenführungsmittel 7 angeordnet. Der Scharkörper 13 weist an seinem unteren Ende 15 auf seiner Rückseite die Saatgutabgabeöffnung 16 auf. Der Scharkörper 13 ist als Furchenformungselement ausgebildet.

Das Tiefenführungsmittel 7 weist einen Tragkörper 17 auf, der als scheibenartiges Element ausgebildet ist. An der seitlichen Außenseite 18 des scheibenartigen Elementes 17 sind etwa senkrecht zur Fläche des scheibenartigen Elementes 17 abstehende Stifte oder Noppen 19 angeordnet. Die Noppen 19 sind mit Abstand zueinander angeordnet und bilden eine unterbrochene Lauffläche für das Tiefenführungsmittel 7, so daß sich quasi eine Tiefenführungsrolle mit unterbrochener Lauffläche ergibt. Die Noppen 19 rollen auf dem Boden ab, so daß sich eine gute und gleichmäßige Tiefenführung für die Scharscheibe 3 und den Scharkörper 13 und somit für das gesamte Säschar 1 ergibt. Die Noppen 19 sind kegel- bzw. kegelstumpfförmig und als Hohlkörper ausgebildet. Weiterhin sind die Noppen 19 im Ausführungsbeispiel nach innen offen, also zur Scharscheibe 3 hin offen.

Der Tragkörper 17 ragt in radialer Richtung über die Noppen 19, die auf einen Kreis 20 angeordnet sind, hinaus. Dieser die Noppen 19 überragende Ring 21 ragt zumindest teilweise bis in die von der Scharscheibe 3 geschaffene Scharfurche 22 und hält sie zumindest teilweise offen.

Der als Furchenformungselement ausgebildete Scharkörper 13 reicht bis in die von der Scharscheibe 3 geschaffenen Säfurche 22. Somit wird eine saubere und gleichmäßige Säfurche 22 erreicht, so daß über die Saatgutabgabeöffnung 16 das Saatgut in der von der Scharscheibe 3 und dem Scharkörper 13 geschaffenen Säfurche 22 abgelegt werden kann. Hinter der Scharscheibe 3 können nicht dargestellte Zustreicher bekannter Bauart zum schließen der Säfurche 20 und zur Bedeckung des in der Säfurche 22 abgelegten Saatgutes angeordnet sein.

Das Tiefenführungsmittel 7 mit dem Tragkörper 18 und den Noppen 19 ist aus einem begrenzt flexiblen Material hergestellt, damit anhaftende und anbackende Boden- und Pflanzengemische im Zuge der Selbstreinigung sich vom Tiefenführungsmittel 7 löst und abfällt. Durch die Ausbildung der Noppen 19 als nach innen offene Hohlkörper wird einerseits eine ausreichende Stabilität für die Tiefenführung des Säschares 1 und andererseits eine ausreichende Flexibilität für die Selbstreinigung gewährleistet.

Das Scheibensäschar 101 ist über die Scharhalterung 102 in aufrechter Ebene bewegbar mittels des Gelenkes 103 an dem Scharbalken 104 angeordnet. Das Scheibensäschar 101 weist eine Scharscheibe 105, die jeweils winkelig gegenüber der Vertikalen und zur Fahrtrichtung 106 schräg angestellt ist, auf. Die Scharscheibe 105 ist mittels eines Drehlagers 107 an der Halterung 108 der Scharhalterung 102 drehbar gelagert. Desweiteren ist an der Halterung 108 ein Bolzen 109 angeordnet. Auf diesem Bolzen 109 ist mittels des zweiarmigen Hebels 110 einer Einstelleinrichtung 111 das Tiefenführungsmittel 112, welches als Tiefenführungsrad ausgebildet ist, angeordnet.

Der Bolzen 109 weist eine umlaufende Nut 113 auf, so daß sich ein Ansatz 114 ergibt. Der Hebel 110 weist eine Aussparung 115 auf, die mit ihren beiden Seiten 116 und ihrer dem Drehlager 117 zugewandten Seite 118 in die Nut 113 faßt. Die Aussparung 115 weist auf der dem Drehlager 117 des Tiefenführungsmittels 112 abgewandten Seite einen Bereich 115' mit zumindest der Größe des Außendurchmessers und/oder die Kontur des Bolzens 109, d.h. die Größe des Ansatzes 114 auf der Außenseite der Nut 113 auf.

An dem Hebel 110 sind im Abstand zu dem Bereich der Aussparung 115 zwei an die Scharhalterung 102 anliegende Auflageelemente 119 angeordnet, die bei der Anordnung des Hebels 110 auf dem Bolzen 109 an der Halterung 108 zur Anlage kommen. Diese beiden Auflageelemente 119 bilden zusammen mit dem Bereich 116 und 118 des Hebels 108, der in der Nut 113 des Bolzens 109 angeordnet ist, eine Dreipunktauflage, so daß eine unverkippbare Lage des Hebels 110 bei der Anordnung auf dem Bolzen 109 gegeben ist.

An dem Hebel 110 ist mittels eines Drehlagers 117 das als Tiefenführungsrad 120 mit unterbrochenen Laufflächen 121, die als Noppen ausgebildet sind, ausgebildete Tiefenführungsrad 112 angeordnet. An dem Hebel 110 ist die vorstehende Rastnase 123 angeordnet, welches als Einstellmittel 111 ausgebildet ist. Diese Rastnase 122 greift in die an der Halterung 108 angeordneten Aussparungen 123 bzw. Durchbrüche ein, so daß unterschiedliche Stellungen des Tiefenführungsmittels 112 zu der Scharscheibe 105 einstellbar sind. Das Tiefenführungsmittel 112 weist eine derartige Elastizität auf, daß der Arm des Hebels 110, an dem die Einstelleinrichtung 111 angeordnet ist, gegen die Halterung 108 gedrückt wird, so daß die Rastnase 122 in jedem Falle sicher in den Durchbruch 123 faßt. Die Durchbrüche 123 sind derart angeordnet und ausgebildet, daß, wenn die Rastnase 122 in diese Durchbrüche 123 faßt, gleichzeitig diese Rastnase 122 als Arretierung des Hebels 108 auf dem Schwenkbolzen 109 dient.

Wenn die Rastnase 122 aus den Durchbrüchen 123 abgehoben ist oder die Rastnase 122 in den Längsschlitz 124, der sich in der Halterung 108 befindet, eingerastet ist, läßt sich der Hebel 110 in Pfeilrichtung 125 verschieben, so daß der größere Teil der Aussparung 115 mit dem größten Durchmesser des Bolzens 109 zur Deckung gebracht wird. In dieser Position kann der Hebel mit dem Tiefenführungsmittel 112 von dem Schwenkbolzen 109 abgenommen werden. In umgekehrter Weise läßt sich der Hebel 110 mit dem Tiefenführungsmittel 112 auf dem Schwenkbolzen 109 anordnen.

Der Hebel 110 ist in Verbindung mit dem Schwenkbolzen 109 und der Scharhalterung 102 derart ausgebildet, daß das Tiefenführungsmittel 112 gegen die Scharscheibe 105 gedrückt wird. Aufgrund der Verzahnung der an dem Tiefenführungsmittel 112 angeordneten Noppen 121, die die unterbrochene Lauffläche des Tiefenführungsrades 112 bilden, erfolgt eine Verzahnung 126 mit dem Boden 127. Hierdurch wird ein sicherer Antrieb und eine sichere Drehung der Scharscheibe 105 auch bei schwierigen Einsatzverhältnissen gewährleistet.

An der Scharhalterung102 ist die Saatgutzuführungsleitung 128 ausmündend angeordnet. Am unteren Ende der Leitung 128 ist das Furchenformungselement 129 an der Halterung 108 der Scharhalterung 102 angeordnet, um eine gute Ablage des Saatgutes in der von der Scharscheibe 105 gezogenen Furche 130 zu gewährleisten.

Aufgrund des Vorhandenseins des Furchenformungselementes 129 läßt sich das Scheibenschar auch ohne Tiefenführungsmittel 112 einsetzen.

## Patentansprüche

1. Scheibensäschar mit einer Scharhalterung, an der zumindest eine Scharscheibe jeweils winkelig Gegenüber der Vertikalen und zur Fahrtrichtung schräg gestellt sowie ein der Scharscheibe, in Fahrtrichtung gesehen, etwa auf Scheibenhöhe zugeordnetes Tiefenführungsmittel mittels einer Einstelleinrichtung drehbar gelagert ist, **dadurch gekennzeichnet, daß** das Tiefenführungsmittel (7) als auf einem Tragkörper (17) kreisförmig um die Drehachse im Abstand zueinander angeordnete, seitlich abstehenden Tiefenführungselementen (19) ausgebildet ist.

2. Scheibensäschar nach Anspruch 1, **dadurch gekennzeichnet, daß** die Tiefenführungselemente (19) noppenartig ausgebildet sind.

3. Scheibensäschar nach einem oder mehreren der vorstehenden Ansprüche, **dadurch gekennzeichnet, daß** die Noppen (19) kegel- oder kegelstumpfförmig ausgebildet sind.

4. Scheibensäschar nach einem oder mehreren der vorstehenden Ansprüche, **dadurch gekennzeichnet, daß** die Noppen (19) Hohlkörper sind, die vorzugsweise zur Innenseite offen sind.

5. Scheibensäschar nach Anspruch 1, **dadurch gekennzeichnet, daß** die Tiefenführungselemente als beabstandet zueinander angeordnete Noppen (19) und/oder Stifte ausgebildet sind.

6. Scheibensäschar nach einem oder mehreren der vorstehenden Ansprüche, **dadurch gekennzeichnet, daß** das Tiefenführungsmittel (7) eine aus Noppen (19) bestehende unterbrochene Lauffläche aufweist.

7. Scheibensäschar nach Anspruch 1, **dadurch gekennzeichnet, daß** der Tragkörper (17) als scheibenartiges Element ausgebildet ist, daß an der Außenseite des scheibenartigen Elementes (17) etwa senkrecht zur Fläche des scheibenartigen Elementes abstehende Stifte oder Noppen (19) angeordnet sind.

8. Scheibensäschar nach einem oder mehreren der vorstehenden Ansprüche, **dadurch gekennzeichnet, daß** zumindest die Stifte oder Noppen (19) aus einem elastischen Material bestehen.

9. Scheibensäschar nach einem oder mehreren der vorstehenden Ansprüche, wobei an der Scharhalterung eine Saatleitung ausmündend angeordnet ist, **dadurch gekennzeichnet, daß** an den Saatleitungsenden ein mit der Scharhalterung (2) verbundener und an die Scheibe (3) anliegender, bis zu dem Scheibenumfang (14) der Scharscheibe (3) reichender Scharkörper (13) sich anschließend angeordnet ist.

10. Scheibensäschar nach einem oder mehreren der vorstehenden Ansprüche, **dadurch gekennzeichnet, daß** der Scharkörper (13) an seinem unteren Ende auf seiner Rückseite eine Saatgutabgabeöffnung (16) aufweist.

11. Scheibensäschar nach einem oder mehreren der vorstehenden Ansprüche, **dadurch gekennzeichnet, daß** der Scharkörper (13) als Furchenformungselement ausgebildet ist.

12. Scheibensäschar nach einem oder mehreren der vorstehenden Ansprüche, **dadurch gekennzeichnet, daß** das Tiefenführungsmittel als Tiefenführungsrolle (7, 17, 19) mit unterbrochener Lauffläche ausgebildet ist, wobei auf der der Scheibe zugeordneten Seite der Tiefenführungsrolle ein die Lauffläche in radialer Richtung überragender schmaler, scheibenartiger Ring (21) angeordnet ist.

13. Scheibensäschar nach einem oder mehreren der vorstehenden Ansprüche, **dadurch gekennzeichnet, daß** das Tiefenführungsmittel (7) zumindest im Bereich der Lauffläche elastisch ausgebildet ist.

14. Scheibensäschar mit einer Scharhalterung, an der zumindest eine Scharscheibe jeweils winklig gegenüber der Vertikalen und zur Fahrtrichtung schräg gestellt sowie ein der Scheibe, in Fahrtrichtung gesehen, etwa in Scheibenebene zugeordnetes, mittels einer Einstelleinrichtung gegenüber der Scharscheibe in Höhenrichtung verstellbares, drehbar gelagertes Tiefenführungsmittel angeordnet ist, nach Anspruch 1, **dadurch gekennzeichnet, dass** die Einstelleinrichtung (11) einen zweiarmigen Hebel (10) aufweist, dass an dem einen Arm des Hebels (10) das Tiefenführungsmittel (12) gelagert ist, dass an dem anderen Arm ein Einstellmittel (22) angeordnet ist, welches mit an der Scharhalterung (8) angeordneten Einstellelementen (23) der Einstelleinrichtung (11) zusammenwirkt, dass der Hebel (10) auf einem an der Scharhalterung (8) befestigten Bolzen (9) schwenkbar und abnehmbar angeordnet ist.

15. Scheibensäschar nach Anspruch 14, **dadurch gekennzeichnet, daß** der Bolzen (109) eine umlaufende Nut (113) aufweist, daß der Hebel (110) eine Aussparung (15) aufweist, die mit ihren beiden Seiten (116), und ihrer dem Drehlager (117) zugewandten Seite (118) in die Nut (113) faßt, und daß die Aussparung (115) auf der dem Drehlager (117) des Tiefenführungsmittels (112) abgewandten Seite (115') zumindest die Größe des Außendurchmessers und/oder die Kontur des Bolzens (109) aufweist.

16. Scheibensäschar nach Anspruch 15, **dadurch gekennzeichnet, daß** an dem Hebel (110) im Abstand zu dem kleineren Bereich der Aussparung (115) zwei an die Scharhalterung (108) anliegende Auflageelemente (119) angeordnet sind.

17. Scheibensäschar nach einem oder mehreren der vorstehenden Ansprüche, **dadurch gekennzeichnet, daß** das an dem Hebel (110) angeordnete Einstellmittel (111) als von dem Hebel (110) vorspringende Rastnase (122) ausgebildet ist, welche in in der Scharhalterung (108) angeordnete Aussparungen bzw. Durchbrüche (123) eingreifend angeordnet ist.

18. Scheibensäschar nach einem oder mehreren der vorstehenden Ansprüche, **dadurch gekennzeichnet, daß** das Tiefenführungsmittel (112) eine derartige Elastizität aufweist, daß der Arm des Hebels (110), an dem die Einstelleinrichtung (111) angeordnet ist, gegen die Scharhalterung (108) drückbar ist.

## Claims

1. Disc sowing coulter, having a coulter holder on which at least one coulter disc is mounted so as to be both at an angle to the vertical and inclined relative to the direction of travel, and on which holder a depth control means, which is associated with the coulter disc, is rotatably mounted by means of an adjusting apparatus substantially at the disc height when viewed with respect to the direction of travel, **characterised in that** the depth control means (7) is in the form of laterally protruding depth control elements (19), which are disposed on a supporting body (17) in a circular manner around the axis of rotation with spacings therebetween.

2. Disc sowing coulter according to claim 1, **characterised in that** the depth control elements (19) are nub-like.

3. Disc sowing coulter according, to one or more of the preceding claims, **characterised in that** the nubs (19) are conical or frustoconical.

4. Disc sowing coulter according to one or more of the preceding claims, **characterised in that** the nubs (19) are hollow bodies which are preferably open towards the inside.

5. Disc sowing coulter according to claim 1, **characterised in that** the depth control elements are in the form of nubs (19) and/or pins which are disposed with spacings therebetween.

6. Disc sowing coulter according to one or more of the preceding claims, **characterised in that** the depth control means (7) has a discontinuous contact surface formed from nubs (19).

7. Disc sowing coulter according to claim 1, **characterised in that** the supporting body (17) is in the form of a disc-like element, and **in that** pins or nubs (19), which protrude substantially at right angles to the surface of the disc-like element (17), are disposed on the outside of the disc-like element.

8. Disc sowing coulter according to one or more of the preceding claims, **characterised in that** at least the pins or nubs (19) are formed from a resilient material.

9. Disc sowing coulter according to one or more of the preceding claims, wherein a seed duct is disposed so as to terminate at the coulter holder, **characterised in that** a coulter body (13), which is connected to the coulter holder (2), abuts against the disc (3) and extends to the disc circumference (14) of the coulter disc (3), is disposed so as to communicate with the seed line ends.

10. Disc sowing coulter according to one or more of the preceding claims, **characterised in that** the coulter body (13) has a seed discharge aperture (16) at its lower end on its rear side.

11. Disc sowing coulter according to one or more of the preceding claims, **characterised in that** the coulter body (13) is in the form of a furrow shaping element.

12. Disc sowing coulter according to one or more of the preceding claims, **characterised in that** the depth control means is in the form of a depth control roller (7, 17, 19) provided with a discontinuous contact surface, a narrow, disc-like ring (21), which projects beyond the contact surface in the radial direction, being disposed on the side of the depth control roller associated with the disc.

13. Disc sowing coulter according to one or more of the preceding claims, **characterised in that** the depth control means (7) is resilient, at least in the region of the contact surface.

14. Disc sowing coulter, having a coulter holder on which at least one coulter disc is disposed so as to be respectively at an angle to the vertical and inclined relative to the direction of travel, and on which holder a rotatably mounted depth control means is disposed, which is associated with the disc, substantially in the disc plane when viewed with respect to the direction of travel, said means being displaceable relative to the coulter disc in the vertical direction by means of an adjusting apparatus, according to claim 1, **characterised in that** the adjusting apparatus (11) has a two-armed lever (10), **in that** the depth control means (112) is mounted on one arm of the lever (10), **in that** an adjusting means (22) is disposed on the other arm, which adjusting means co-operates with adjusting elements (23) of the adjusting apparatus disposed on the coulter holder (108), and **in that** the lever (10) is disposed on a bolt (9), mounted on the coulter holder (108), so as to be pivotable and removable.

15. Disc sowing coulter according to claim 14, **characterised in that** the bolt (109) has an encircling groove (113), **in that** the lever (110) has a recess (115) which fits into the groove (113) with its two sides (116) and its side (118) facing the rotary bearing (117), and **in that** the recess (115) has, on the side (115') remote from the rotary bearing (117) of the depth control means (112), at least the size of the external diameter and/or the contour of the bolt (109).

16. Disc sowing coulter according to claim 15, **characterised in that** two bearing elements (119), which abut against the coulter holder (108), are disposed on the lever (110) at a spacing from the smaller region of the recess (115).

17. Disc sowing coulter according to one or more of the preceding claims, **characterised in that** the adjusting means (111), which is disposed on the lever (110), is in the form of a detent (122), which protrudes from the lever (110) and is disposed so as to engage in recesses or respectively openings (123) provided in the coulter holder (108).

18. Disc sowing coulter according to one or more of the preceding claims, **characterised in that** the depth control means (112) has such a degree of elasticity that the arm of the lever (110), on which the adjusting apparatus (111) is disposed, is urgeable towards the coulter holder (108).

## Revendications

1. Soc à disques de semoir comportant un support de soc, portant au moins un disque formant soc incliné à la fois par rapport à la direction verticale et par rapport à la direction de déplacement, et avec, vu dans la direction de déplacement, sensiblement à la hauteur du disque, un moyen de guidage en profondeur monté à rotation à l'aide d'une installation de réglage,
**caractérisé en ce que**
le moyen de guidage en profondeur (7) est réalisé sous la forme d'éléments de guidage en profondeur (19) répartis en saillie latéralement sur un organe de support (17) suivant une répartition circulaire autour de l'axe de rotation à distance les uns des autres.

2. Soc à disques de semoir selon la revendication 1,
**caractérisé en ce que**
les éléments de guidage en profondeur (19) sont en forme de bossages.

3. Soc à disques de semoir selon l'une ou plusieurs des revendications précédentes,
**caractérisé en ce que**
les bossages (19) ont une forme de cône ou de tronc de cône.

4. Soc à disques de semoir selon l'une ou plusieurs des revendications précédentes,
**caractérisé en ce que**
les bossages (19) sont des corps creux, de préférence ouverts du côté intérieur.

5. Soc à disques de semoir selon la revendication 1,
**caractérisé en ce que**
les éléments de guidage en profondeur sont des bossages (19) et/ou des broches écartes les uns des autres.

6. Soc à disques de semoir selon l'une ou plusieurs des revendications précédentes,
**caractérisé en ce que**
le moyen de guidage en profondeur (7) comporte une surface de roulement discontinue formée de bossages (19).

7. Soc à disques de semoir selon la revendication 1,
**caractérisé en ce que**
l'organe de support (17) est un élément en forme de disque dont le côté extérieur comporte des broches ou des bossages (19) en saillie sensiblement perpendiculairement à la surface de l'élément en forme de disque.

8. Soc à disques de semoir selon l'uns ou plusieurs des revendications précédentes,
**caractérisé en ce qu'**
au moins les broches ou les bossages (19) sont en une matière élastique.

9. Soc à disques de semoir selon l'une ou plusieurs des revendications précédentes,
selon lequel
le support de soc comporte une conduite de semence qui débouche,
**caractérisé en ce qu'**
aux extrémités des conduites de semence il est prévu de manière adjacente un corps de soc (13), relié au support de soc (2) et appliqué contre le disque (3) pour arriver jusqu'à la périphérie (14) du disque formant soc (3).

10. Soc à disques de semoir selon l'une ou plusieurs des revendications précédentes,
**caractérisé en ce que**
le corps de soc (13) comporte un orifice de sortie de semence (16) à son extrémité inférieure, du côté arrière.

11. Soc à disques de semoir selon l'une ou plusieurs des revendications précédentes,
**caractérisé en ce que**
le corps de soc (13) est réalisé sous la forme d'un élément formant un sillon.

12. Soc à disques de semoir selon l'une ou plusieurs des revendications précédentes,
**caractérisé en ce que**
le moyen de guidage en profondeur est réalisé sous la forme d'un galet de guidage en profondeur (7, 17, 19) ayant une surface de roulement discontinue,
et sur le côté du galet de guidage en profondeur tourné vers le disque, il est prévu un anneau en forme de disque (21), étroit, dépassant la surface de roulement dans la direction radiale.

13. Soc à disques de semoir selon l'une ou plusieurs des revendications précédentes,
**caractérisé en ce que**
le moyen de guidage en profondeur (7) est élastique au moins au niveau de la surface de roulement.

14. Soc à disques de semoir comportant un support de soc auquel est relié au moins un disque de soc incliné à la fois par rapport à la direction verticale et par rapport à la direction de déplacement ainsi qu'un moyen de guidage en profondeur monté à rotation, prévu au niveau du disque et situé, lorsqu'on regarde dans la direction de déplacement, sensiblement dans le plan du disque, en étant réglable en hauteur par rapport au disque de soc par l'intermédiaire d'une installation de réglage selon la revendication 1,
**caractérisé en ce que**
l'installation de réglage (11) comporte un levier à deux bras (10), l'un des bras du levier (10) recevant le moyen de guidage en profondeur (12) et l'autre bras comportant un moyen de réglage (22) qui coopère avec des éléments de réglage (23) de l'installation de réglage (11) prévus sur le support de soc (8),
le levier (10) étant monté de manière pivotante et amovible sur un goujon (9) fixé au support de soc (8).

15. Soc à disques de semoir selon la revendication 14,
**caractérisé en ce que**
le goujon (109) présente une rainure périphérique (113),
le levier (110) comporte une cavité (15) dont les deux côtés (116) et son côté (118) tourné vers le palier de rotation (117) prennent dans la rainure (113), et
la cavité (115) présente sur le côté (115'), à l'opposé du palier de rotation (117) du moyen de guidage en profondeur (112), au moins la taille du diamètre extérieur et/ou du contour du goujon (109).

16. Soc à disques de semoir selon la revendication 15,
**caractérisé en ce qu'**
à distance de la petite zone de la cavité (115), le levier (110) comporte deux éléments d'appui (119) venant contre le support de soc (108).

17. Soc à disques de semoir selon l'une ou plusieurs des revendications précédentes,
**caractérisé en ce que**
le moyen de réglage (111) prévu sur le levier (110) comporte un bec d'encliquetage (122) venant en saillie par rapport au levier (110) et qui vient prendre dans des découpes ou des passages (123) prévus dans le support de soc (108).

18. Soc à disques de semoir selon l'une ou plusieurs des revendications précédentes,
**caractérisé en ce que**
le moyen de guidage en profondeur (112) a une élasticité telle que le bras du levier (110) muni de l'installation de réglage (111) peut être poussé contre le support de soc (108).
